# EUROPEAN PATENT APPLICATION

(11) **EP 3 680 527 A1**
(43) Date of publication of application: **15.07.2020**
(21) Application number: 19150897.7
(22) Date of filing: 09.01.2019
(51) Int. Cl.: F16K 17/38, F17C 13/04

(54) **VALVE ASSEMBLY TO BE DIRECTLY COUPLED TO A CONTAINER CONTAINING COMPRESSED GAS**

(71) Applicant: Linde GmbH, 82049 Pullach (DE)
(72) Inventor: Kudelka, Miroslav, 85521 Ottobrunn (DE); Rieker, Bernd, 86899 Landsberg (DE)

(57) **Abstract**

The present invention pertains to a valve assembly (100) for direct coupling to a container of compressed gas, comprising a valve seat (6) and valve head (5) movable with respect to the valve seat (6) within a predetermined movement path, wherein a flow of gas is controlled by setting a distance between the valve seat (6) and the valve head (5); and a temperature-responsive component (8) being operable in an open state above a threshold temperature, and in a closed state below the threshold temperature, wherein in the open state, the temperature-responsive component is configured to act on the valve head (5) such that a maximum distance between the valve head (5) and the valve seat (6) is reduced to a limited value.

## Description

### Technical Field

The present invention relates to a valve assembly to be directly coupled to a container containing compressed gas.

### Technological Background

The use of compressed oxygen containers poses serious risks, not only in clinical and laboratory settings but particularly in the use of homecare medical treatments. Because oxygen is capable of increasing the flammability of other materials and accelerating the rate of combustion, limiting the flow of oxygen from said container as quickly as possible in the event of a fire is critical. Valves that are able to respond to excessive heat are thus a crucial safety element when utilizing compressed oxygen.

Examples of temperature-responsive valves known from the prior art include DE 37 008 22 C1, WO 2017/081627 A1 and US 2,324,552 and comprise retaining mechanisms wherein an actuator, commonly a spring-loaded shaft, is held in a high potential energy state by a restraint to hold open the valve under normal conditions, and wherein release of said restraint translates the stored potential energy into a kinetically driven movement of the actuator to close the valve above a set temperature. Valves of this art operate independently and are, therefore, commonly used as separate entities downstream of a main regulator. Such constructs, however, necessitate the purchase and assembly of multiple valve components to regulate the flow of gas, which can, in turn, be expensive and bulky.

Valve integrated pressure regulators (VIPRs) on the other hand can be directly coupled to containers of compressed gas, combining pressure regulation and safety functions into a single, compact design, thereby eliminating the burden on the user to purchase multiple components and to construct complex valve assemblies.

Proposed arrangements allowing temperature-sensing functionalities within VIPRs are also known from the prior art according to WO 2016/066685A1 and rely on electronic communication to an actuator. In this example, two or more temperature sensors are arranged either within the valve housing, external to the valve housing, or a combination thereof and signal the actuator to close the valve in the event of exceeding a set-point temperature. Electronic components, however, can themselves be vulnerable to excessive heat, whereas mechanical systems can more easily be designed with materials robust enough to withstand high temperatures. Mechanical systems are, furthermore, often much simpler than their electronic counterparts, allowing for cheaper construction and more intuitive operation on the part of the user.

### Summary of the invention

It is an object of the present invention to provide a valve assembly which overcomes the aforementioned limitations of prior valve assemblies seeking to incorporate temperature-responsive capabilities.

The above object is solved by a valve assembly according to claim 1. Preferred and beneficial aspects and embodiments are provided in the dependent claims, the description and the Figures.

Accordingly, a valve assembly is suggested, comprising a valve seat and valve head movable with respect to the valve seat within a predetermined movement path, wherein a flow of gas is controlled by setting a distance between the valve seat and the valve head. A temperature-responsive component being operable in a closed state above a threshold temperature, and in an open state below the threshold temperature, wherein in the closed state, the temperature-responsive component is configured to act on the valve head such that a distance between the valve head and the valve seat is reduced.

By reducing the distance between the valve head and the valve seat, a flow of gas is reduced in response to arriving at or exceeding the threshold temperature at the temperature-responsive component. Accordingly, it is possible to automatically reduce the flow of gas in case the temperature at the temperature-responsive component exceeds the predetermined threshold temperature, for instance as a consequence of a spontaneous ignition of the outflowing gas. Thus, with respect to an unreduced, original flow of gas, a resulting flame size due to ignition of the flow of gas at the valve can be reduced or limited to an extent that a person or operator can reach the valve to stop the gas flow through the valve.

The reduction of the distance between the valve head and the valve seat in response to exceeding the threshold temperature may be reduced to zero, leading to a shut off of the gas flow.

The reduction of the distance between the valve head and the valve seat in response to exceeding the threshold temperature may also be reduced to a preset, limited value, leading to a defined reduced gas flow when the temperature exceeds the threshold temperature. This reduction of gas flow to a limited value might prove useful in settings in which a minimum gas flow is necessary to maintain a treatment as long as possible.

In case the distance of the valve head relative to the valve seat is greater than the limited value when the threshold temperature is exceeded, the valve head can instantly be pushed or thrusted towards the valve seat by the temperature-responsive component until the limited value is reached. That is, the flow of gas is instantly reduced to a flow rate which is determined by the limited distance between the valve head and the valve seat such that in case the threshold temperature is exceeded, the limited flow is always reached.

According to a preferred embodiment, in the open state, the temperature-responsive component is configured to allow movement of the valve head along its entire movement path. Hence, the temperature-responsive component does not interfere with the movement path of the valve head below the threshold temperature such that the valve assembly substantially behaves like a conventional valve assembly for all temperatures below the threshold temperature.

According to as preferred embodiment, the temperature-responsive component may be configured to change its conformation in response to temperature, wherein the temperature-responsive component preferably comprises a bi-metal strip and/or a bi-metal snap actor and/or a memory metal. By means of this arrangement, operation of the temperature-responsive component between the open state and the closed state can easily be achieved. Hence, the valve assembly may comprise a simple yet safe structure.

According to yet another preferred embodiment, the temperature-responsive component is adapted for being automatically reset from the closed state to the open state when the temperature at the temperature-responsive component falls below the threshold temperature.

Alternatively or in addition, the temperature-responsive component may be adapted for being manually reset.

According to another preferred embodiment, the temperature-responsive component may comprise a switch and a blocking element, wherein the switch is adapted to operate in the open state below the threshold temperature and in the closed state in response to exceeding the threshold temperature, and wherein the blocking element is adapted to limit the movement of the valve head when the switch is operated in the closed state. Hence, changing state and reduction of movement can be split and performed by the above mentioned components, wherein both components may be adapted to ideally match their respective requirements.

A reliable structure of the valve assembly may be achieved when the switch comprises a conformation in the open state such that the blocking element is kept out of a movement path of the valve head, and in the closed state, the switch undergoes a conformational change with respect to the open state, wherein the conformation of the switch in the closed state permits displacement of the blocking element into the movement path of the valve head, thereby limiting the movement of valve head.

Alternatively or in addition, the conformation of the switch in the closed state may place the switch itself in the movement path of the valve head, thereby acting as the blocking element to limit the movement of the valve head.

According to another embodiment, the switch may be adapted for operating in between the open and closed states, wherein preferably, the switch is configured to gradually change its conformation with respect to temperature. Consequently, a maximum potential movement or distance between the valve head and the valve seat may be adjusted with respect to a changing temperature.

Alternatively, the switch may be configured to maintain a substantially stable first conformation below the threshold temperature and to snap or flip into a second conformation when exceeding the threshold temperature, wherein the second confirmation preferably also comprises a substantially stable form and may not be affected by a further rise of temperature above the threshold temperature. Thereby, the switch may not affect movement of the valve head along its movement path when the temperature is below the threshold temperature, and may provide secure limitation of the distance of the valve head with respect to the valve seat and hence the flow of gas when the temperature reaches the threshold temperature. In other words, the temperature-responsive element may be configured as a bi-stable switch.

According to another preferred embodiment, the switch and the blocking element are formed as a single element, wherein in the open state the switch keeps the blocking element out of the movement path of the valve head, and wherein in the closed state the switch places the blocking element in the path of the valve head. Thereby, a simple and robust structure may be achieved.

According to another preferred embodiment, the blocking element and the switch may be mechanically coupled.

Preferably, the switch and the blocking element may be formed as separate entities, wherein in the open state, the switch keeps the blocking element out of the movement path of the valve head, and wherein in the closed state, the switch releases the blocking element such that it is movable into the path of the valve head.

The blocking element may further be configured to fall into the movement path of the valve head via gravitation. In an alternative, the blocking element may be held under tension by a biasing force, preferably provided by the switch, wherein in the closed state, the biasing force thrusts the blocking element towards and into the movement path of the valve head. In the latter case, functioning of the valve assembly is independent of an orientation in space of the valve assembly.

According to yet another preferred embodiment, the switch and the blocking element are formed as separate entities, wherein in the open state, the switch holds the blocking element out of the movement path of the valve head, and in the closed state, the switch exerts a force on the blocking element, such that the blocking element is pushed into the path of the valve head.

To achieve a decoupling of the switch and the blocking element, the switch may be configured to exert a force on a lever and/or a pin as it enters the closed state, wherein the lever and/or the pin pushes the blocking element into the movement path of the valve head. Hence, the switch does not have to be in direct proximity of the blocking element, leading to an increased freedom of the design of the valve assembly.

When the threshold temperature is set to at least 60° C, preferably at least 80° C, particularly preferably 100° C, or even higher, safe and unrestricted use of the valve assembly may be provided in case of general use and yet the flow of gas in case of a spontaneous ignition of outflowing gas may be limited early enough for preventing severe damages.

A robust and simple design of the valve assembly along with reliable operation may be achieved when an endpoint of a displacement of the blocking element is set by a stopper, and/or when the blocking element is guided along a track and/or when the blocking element is movable about a hinge, preferably a flexible hinge.

### Brief description of the drawings

The present disclosure will be more readily appreciated by reference to the following detailed description when being considered in connection with the accompanying Figures in which:
- Figure 1: schematically provides a sectional view of a valve assembly for direct coupling to a container of compressed gas;
- Figure 2: schematically illustrates a diagram of how the switch may operate in or between open and closed states; and
- Figures 3-5: schematically illustrate optional configurations of a temperature-responsive component of the valve assembly according to Figure 1.

### Detailed description of preferred embodiments

In the following, the invention will be explained in more detail with reference to the accompanying Figures. In the Figures, like elements are denoted by identical reference numerals and repeated description thereof may be omitted in order to avoid redundancies.

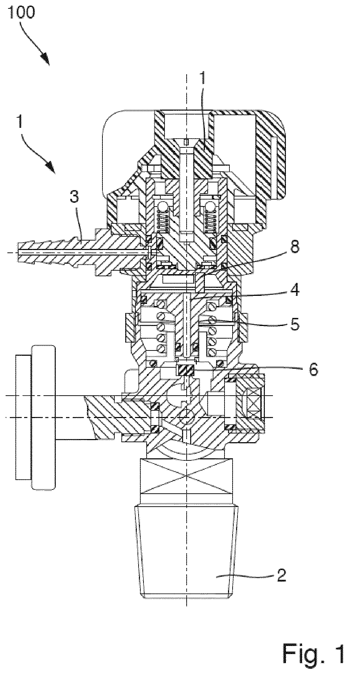

Figure 1 schematically provides a sectional view of a valve assembly 100 for direct coupling to a container containing compressed gas according to a first embodiment. The valve assembly 100 comprises a housing body 1 which is arranged to be directly coupled to a container containing pressurized gas. The housing body 1 comprises an inlet 2 and an outlet 3 which are connected by a channel 4 for accommodating a gas flow between the inlet 2 and the outlet 3. The flow of gas in the channel 4 is regulated by a gap between a valve head 5 and a valve seat 6 wherein a manual adjuster 7 is provided for adjusting the position of the valve head 5 relative to the valve seat 6 in order to set the width of the gap between the valve head 5 and the valve seat 6. Hence, a flow of gas is controlled by setting a distance between the valve seat 6 and the valve head 5 by means of the manual adjustment 7. This corresponds to the regular operation of a common valve assembly 100.

The valve assembly 100 further comprises a temperature-responsive component 8 which is arranged to act on the valve head 5. The temperature-responsive component 8 is intended to move the valve head 5 towards the valve seat 6 to reduce the flow of gas in response to a temperature acting on the temperature-responsive component 8 which exceeds a predetermined threshold temperature.

The temperature-responsive component 8 is arranged to react to the temperature surrounding it and may move to an open state below a predetermined threshold temperature, and to a closed state above the threshold temperature. In the closed state, the temperature-responsive component 8 is configured to act on the valve head 5 such that a distance between the valve head 5 and the valve seat 6 is reduced, preferably to a limited value, in order to reduce the gap between the valve seat 6 and the valve head 5 to effect a reduction of the gas flowing through the valve assembly 100. In other words, if the valve assembly 100 and consequently the temperature-responsive component 8 which is contained therein exceeds a predetermined temperature, the gas flow is reduced.

In a preferred setup, the temperature-responsive component 8 is arranged to eliminate the distance between valve head 5 and valve seat 6 above the predetermined threshold temperature. In other words the valve assembly 100 is shut completely above the threshold temperature.

This arrangement provides for additional safety in the valve assembly 100 such that in a case of overheating or fire the gas flow is reduced or stopped.

In the open state, however, the temperature-responsive component 8 is configured to allow free movement of the valve head 5 along its entire movement path. In other words, below the predetermined threshold temperature, the gas flow can be set manually to a value which is not restricted by the temperature-responsive component 8. Thus, in normal operation and below the temperature threshold the valve assembly 100 basically behaves like a common valve assembly.

Under normal conditions, e.g. below a threshold temperature of 80° C, the valve head 5 is not restricted by the temperature-responsive component 8 but is capable of being moved by the manual adjustment 7, thereby regulating the flow of gas through the channel 4 by lowering or lifting valve head 5 relative to the valve seat 6.

However, when the temperature exceeds a predetermined threshold temperature, the temperature-responsive component 8 is arranged to introduce a physical blocking element to limit the movement of the valve head 5. It is noted that the blocking element introduced by the temperature-responsive component 8 acts on the valve head 5 separately from the manual adjustment 7. The manual adjustment 7 may not be affected by the blocking element in any way. However, in the event of a fire, the user may not be able to reach to the manual adjustment 7, in which case the self-regulating safety mechanism described above is advantageous.

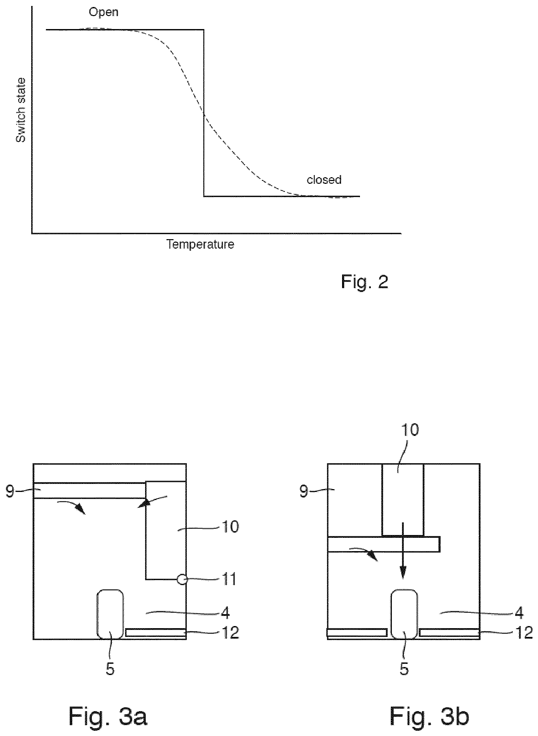

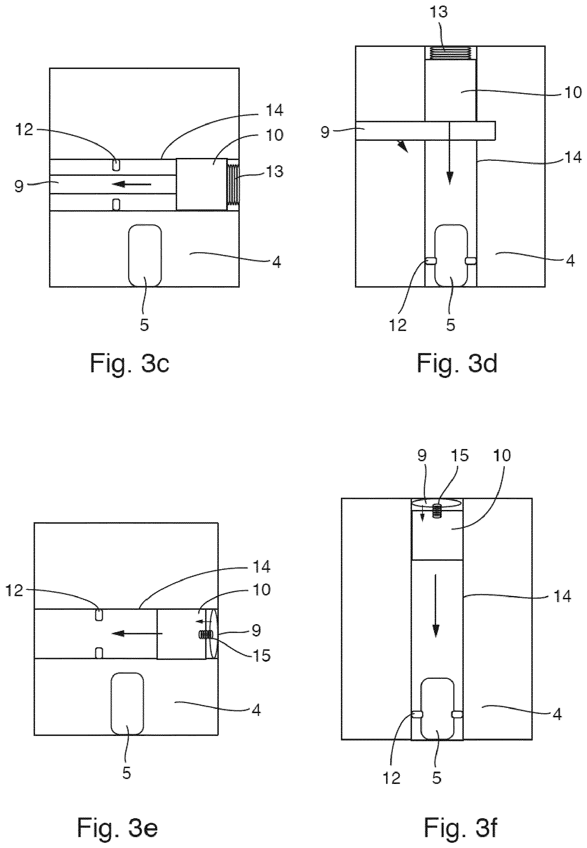

As shown in detail with respect to Figures 3 to 5, the temperature-responsive component 8 may comprise a switch 9 and a blocking element 10 wherein the switch 9 is able to change conformation in response to temperature, as shown in Figure 2. Preferably, the switch 9 comprises a bi-metal, optionally in the form of a strip, or a disk. The different conformations of the switch 9 represent different states, in particular, open and closed states, wherein the open state comprises no conformational change and wherein the closed state comprises a conformational change of the switch 9.

Optionally, the switch 9 may be able to operate between open and closed states and, owing to the physical properties of the switch, may preferably be capable of reversibly alternating between said states. The ability of the switch 9 to automatically alternate between open and closed states as a function of temperature would thus impart the valve with the capability of automatically resetting itself when normal temperature conditions are re-established.

As can be taken from Figures 3 to 5, the closed state of the switch 9 is accompanied by the release of blocking element 10 into the movement path of the valve head 5. The blocking element 10 restricts the movement of the valve head 5, forcing it toward the direction of the valve seat 6 thereby reducing a maximum potential distance between the valve seat 6 and the valve head 5 and hence the flow of gas. The blocking element 10 may be released into the movement path of the valve head 5 according to the optional schemes depicted in Figure 3.

According to Figures 3a and 3b, the switch 9 balances the force of gravity to hold the blocking element 10 out of the movement path of the valve head 5 in its closed state. Upon entering the open state, the hold from the switch 9 is released and the blocking element 10 may fall into the movement path of the valve head 5 due to gravity, following the direction indicated by the arrows.

According to Figure 3a, this principle is achieved by linking the blocking element 10 to the side of the channel 4 via a flexible hinge 11, which guides the downward direction of the blocking element 10. An optional stopper 12 determines the degree to which the blocking element 10 is able to fall. The hinge 11 further allows for an automatic reset, wherein the switch 9, upon re-entering the closed state following re-establishment of normal conditions, is able to push the blocking element 10 back into place, as guided by the hinge 11. A similar principle is achieved according to the scheme in Figure 3b, where the blocking element is optionally positioned directly in line with the axis of the valve head 5. In this case, the blocking element 10 is able to fall directly over the valve head 5 once the switch 9 has opened. Again, optional stoppers 12 may be used to determine the end point of the blocking element's 10 displacement.

The schemes depicted in Figures 3a and 3b may additionally be configured with an optional manual reset, whereby an external adjustment would allow the user to pull the blocking element 10 back into its resting position, as set by the closed state of the switch 9.

According to Figures 3c and 3d, the blocking element 10 is attached to the chamber via a spring under tension 13. The switch 9 functions to oppose the force of the spring 13, holding the blocking element 10 out of the movement path of the valve head 5. Upon entering the closed state, the switch 9 is no longer present to bias the spring 13 and the blocking element 10 is, in turn, pushed into the path of the valve head 5. Preferably, the blocking element 10 will be guided along a track 14, which optionally comprises stoppers 12 to determine the endpoint of the blocking element 10 following release.

This principle may be achieved wherein the blocking element 10 is held perpendicular to the axis of the valve head 5 as depicted in Figure 3c or wherein the blocking element 10 is positioned in line with the axis of the valve head 5 as depicted in Figure 3d. The schemes depicted in Figures 3c and 3d may optionally be configured for an automatic reset whereby the switch 9 is capable of pushing the blocking element 10 back out of the movement path of the valve head 5 upon re-entering the closed state. The schemes depicted in Figures 3c and 3d may additionally be configured with an optional manual reset, whereby an external adjustment would allow the user to pull the blocking element 10 back into its resting position, as set by the closed state of the switch 9.

According to Figures 3e and 3f, the switch 9, optionally a bimetal snap disc, exerts a force on the blocking element 10 upon entering the closed state, thus thrusting into the movement path of the valve head 5. The blocking element 10 is preferably guided along a track 14, optionally comprising stoppers 12 to determine the endpoint of the blocking element 10 following release. The blocking element 10 is preferably mechanically connected to the switch 9 via a flexible linker 15, optionally a spring, such that when the system cools, the switch 9 will pull the blocking element 10 back as it reenters its open state. This principle may be achieved wherein the switch 9 and blocking element 10 are positioned perpendicular to the axis of the valve head 5, as depicted in Figure 3e or wherein the blocking element 10 and switch 9 are positioned in line with the axis of the valve head 5, as depicted in Figure 3f.

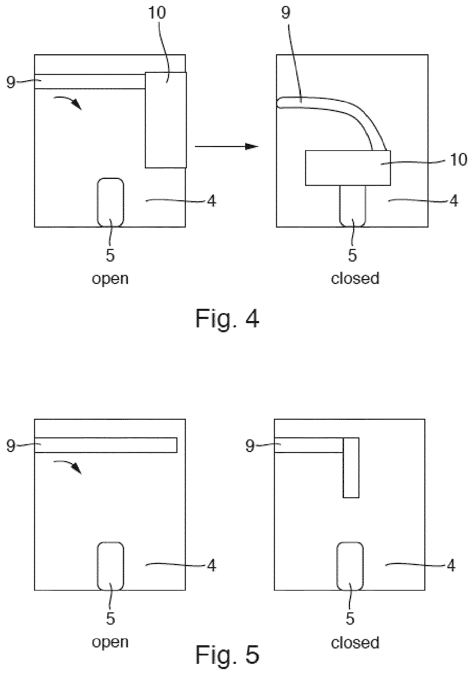

In another embodiment, schematically depicted in Figure 4, the switch 9 and the blocking element 10 may be joined together to comprise a single element such that when the switch 9 enters the open state, it pulls the blocking element 10 into the movement path of the valve head 5.

In another embodiment, schematically depicted in Figure 5, the switch 9 may itself act as the blocking element 10 such that when it enters the closed state, it is capable of restricting the movement of the valve head 5.

The aforementioned embodiments are described in terms of the switch directly acting on a blocking element, but may also include an intermediate component such as a lever or a pin to transmit the conformational change of the switch into displacement of a blocking element into the movement path of the valve head.

The present invention further relates to the construction of a valve assembly wherein said valve comprises the capability for direct coupling with a container of compressed gas; a mechanism for regulating the flow of gas, preferably a valve head and a valve seat; and a temperature-responsive component which is capable of acting either directly or indirectly on the regulating mechanism.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

### List of reference numerals

- 1: Body
- 2: Inlet
- 3: Outlet
- 4: Channel
- 5: Valve head
- 6: Valve seat
- 7: Manual adjustment
- 8: Temperature-responsive component
- 9: Switch
- 10: Blocking element
- 11: Hinge
- 12: Stopper
- 13: Spring
- 14: Track
- 15: Linker
- 100: Valve assembly

## Claims

1. A valve assembly (100) for controlling the flow of gas out of a container containing compressed gas, comprising
a valve head (5) movable with respect to a valve seat (6), wherein a flow of gas is controlled by setting a distance between the valve seat (6) and the valve head (5),
**characterized by**
a temperature-responsive component (8) which is configured to act on the valve head (5) to reduce a distance between the valve head (5) and the valve seat (6) when a temperature threshold is exceeded.

2. The valve assembly (100) according to claim 1, wherein below the temperature threshold the temperature-responsive component (8) is configured to allow movement of the valve head (5).

3. The valve assembly (100) according to claim 1 or 2, wherein the temperature-responsive component (8) is configured to change its conformation in response to temperature, wherein the temperature-responsive component (8) preferably comprises a bi-metal strip and/or a bi-metal snap actor and/or a memory metal.

4. The valve assembly (100) according to any one of claims 1 to 3, wherein the temperature-responsive component (8) is adapted to be automatically reset when the temperature falls below the temperature threshold, and/or the temperature-responsive component (8) is adapted for being manually reset.

5. The valve assembly (100) according to any one of claims 1 to 4, wherein the temperature-responsive component (8) comprises a switch (9) and a blocking element (10), wherein the switch (9) is adapted to limit the movement of the valve head (5) in a closed state.

6. The valve assembly (100) according to claim 5, wherein in an open state below the threshold temperature, the switch (9) comprises a conformation such that the blocking element (10) is kept out of a movement path of the valve head (5), and in a closed state above the threshold temperature, the switch (9) shows a conformational change with respect to the open state,
wherein the conformation of the switch (9) in the closed state permits displacement of the blocking element (10) into the movement path of the valve head (5), thereby limiting the movement of valve head (5);
or the conformation of the switch (9) in the closed state places the switch (9) in the movement path of the valve head (5), thereby acting as the blocking element (10) to limit the movement of the valve head (5).

7. The valve assembly (100) according to any one of claims 5 to 6, wherein the switch (9) is adapted for operating in between the open and closed states.

8. The valve assembly (100) according to any one of claims 5 to 7, wherein
the switch (9) and the blocking element (10) are formed as a single element, wherein in the open state the switch (9) keeps the blocking element (10) out of the movement path of the valve head (5), and in the closed state the switch (9) places the blocking element (10) in the path of the valve head (5); **or**
the switch (9) and the blocking element (10) are formed as separate entities, wherein in the open state the switch (9) keeps the blocking element (10) out of the movement path of the valve head (5), and in the closed state the switch (9) releases the blocking element (10) such that it is movable into the path of the valve head (5),
wherein preferably, the blocking element (10) is configured to fall into the movement path of the valve head (5) via gravitation, or the blocking element (10) is held under tension by a biasing force, preferably provided by the switch (9), wherein in the closed state, the biasing force thrusts the blocking element (10) towards and into the movement path of the valve head (5); **or**
the switch (9) and the blocking element (10) are formed as separate entities, wherein in the open state the switch (9) holds the blocking element (10) out of the movement path of the valve head (5), and in the closed state the switch (9) exerts a force on the blocking element (10) such that the blocking element (10) is thrust into the path of the valve head (5); **or**
the switch (9) exerts a force on a lever and/or a pin as it enters the open state, wherein the lever and/or the pin thrusts the blocking element (10) into the movement path of the valve head (5).

9. The valve assembly (100) according to any one of the preceding claims , wherein the threshold temperature is at least 60° C, preferably at least 80° C, particularly preferably 100° C, or higher.

10. The valve assembly (100) according to any one of claims 5 to 9, wherein the valve head (5) is movable along a valve head axis, wherein, in the open state the blocking element (10) is held perpendicular to the valve head axis, or the blocking element (10) in held in line with the valve head axis.

11. The valve assembly (100) according to any one of claims 5-10, wherein the blocking element (10) and the switch (9) are mechanically coupled.

12. The valve assembly (100) according to any one of claims 5 to 11, wherein an endpoint of a displacement of the blocking element (10) is set by a stopper (12), and/or wherein the blocking element (10) is guided along a track (14) and/or wherein the blocking element (10) is movable about a hinge (11), preferably a flexible hinge (11).
